# EUROPÄISCHE PATENTSCHRIFT

(11) **EP 0 599 986 B1**
(45) Veröffentlichungstag und Bekanntmachung des Hinweises auf die Patenterteilung: **24.01.1996**
(21) Anmeldenummer: 92918477.8
(22) Anmeldetag: 27.08.1992
(51) Int. Cl.: F16H 61/04, B60K 41/22, F16H 3/38

(54) **VERFAHREN ZUM SCHALTEN EINES RÜCKWÄRTSGANGES IN EINEM ZAHNRÄDERWECHSELGETRIEBE**
METHOD TO ENGAGE A REVERSE DRIVE IN A CHANGE GEAR UNIT
PROCEDE D'ENGAGER UNE MARCHE ARRIERE DANS UNE BOITE DE VITESSES A PIGNONS DENTES

(30) Priorität: 30.08.1991 DE 4128834
(43) Veröffentlichungstag der Anmeldung: 08.06.1994
(73) Patentinhaber: ZF FRIEDRICHSHAFEN Aktiengesellschaft, D-88038 Friedrichshafen (DE)
(72) Erfinder: MANZ, Dieter, D-7991 Eriskirch (DE)
(86) Internationale Anmeldenummer: EP9201968
(87) Internationale Veröffentlichungsnummer: WO9305324

(56) Entgegenhaltungen:
- EP-A- 0 114 513
- EP-A- 0 260 133
- GB-A- 2 159 899

## Beschreibung

Die Erfindung betrifft ein verfahren zum Schalten eines Rückwärtsganges in einem Zahnräderwechselgetriebe mit einer Steuereinheit, die synchronisierte Klauenkupplungen von Gangstufen schaltet, während eine Fahrkupplung die Zugkraft unterbricht, entsprechend den Angaben im Oberbegriff von Anspruch 1.

Derartige Zahnräderwechselgetriebe sind vielfach bekannt, zum Beispiel aus der WO 86 05 449. Häufig sind bei anderen synchronisierten Zahnräderwechselgetrieben nur die Vorwärtsgangstufen mit Synchronisiereinrichtungen versehen, während die Rückwärtsgangstufe eine einfache Klauenkupplung ohne Synchronisiereinrichtung hat. Solche Getriebe sind zwar einfacher im Aufbau, verursachen aber Ratschgeräusche an der Schaltverzahnung, wenn beim Schalten in den Rückwärtsgang eine unzulässig hohe Relativdrehzahl zwischen den zu schaltenden Wellen vorliegt sowie lange Schaltzeiten, weil durch das Ratschen die Drehzahdifferenz nur langsam verringert wird. Außerdem verschleißt beim Ratschen die Schaltverzahnung mit der Folge, daß die Zähne schlechter einspuren und häufiger nicht oder nur schwer geschaltet werden können, weil ein Zahn auf einen anderen trifft.

Die Europäische Patentschrift 0 114 513 beschreibt ein gattungsgemäßes Verfahren zum elektronischen Steuern eines Fahrzeugs, bei dem die Fahrzeugkupplung als Antwort auf einen an eine Kupplungs-Betätigungseinrichtung gegebenen Befehl durch eine elektronische Kontrolleinheit zu dem Zeitpunkt ausgerückt wird, zu dem das Getriebe in den Rückwärtsgang geschaltet werden soll. Danach wird das Getriebe in die Neutralstellung geschaltet. Anschließend wird in einen Vorwärtsgang geschaltet, der eine Synchronisiereinrichtung aufweist. Aus diesem Vorwärtsgang heraus wird abschließend in den Rückwärtsgang geschaltet. Dabei benötigt die Schaltung eine durch die elektronische Kontrolleinheit gesteuerte Kupplung.

Durch das vollständige Einlegen des Vorwärtsganges wird die Eingangswelle gestoppt. Der Rückwärtsgang wird dann bei stehenden Wellen nur noch eingelegt.

Der Erfindung liegt die Aufgabe zugrunde, mit einfachen Mitteln die gezeigten Nachteile zu vermeiden. Die Aufgabe wird durch die Angaben im Anspruch 1 gelöst. Dabei aktiviert die Steuereinrichtung nach dem Öffnen der Fahrkupplung oberhalb einer vorgegebenen Drehzahl der Eingangswelle beim Schalten in die Rückwärtsgangstufe eine Synchronisiereinrichtung einer Vorwärtsstufe und schaltet bei einer Drehzahl unterhalb der vorgegebenen Drehzahl der Eingangswelle den Rückwärtsgang und löst die Synchronisiereinrichtung wieder, bevor die Fahrkupplung schließt.

Weil das erfindungsgemäße Zahnräderwechselgetriebe keine Synchronisiereinrichtung für die Rückwärtsgangstufe hat, ist es einfacher im Aufbau und die Fahrkupplung kann leicht eingestellt werden. Trotzdem treten keine störenden Geräusche beim Schalten in die Rückwärtsgangstufe auf, weil die zu schaltenden Wellen durch die Steuereinrichtung mit Hilfe der Synchronisiereinrichtung einer Vorwärtsgangstufe auf eine zulässige Relativdrehzahl zueinander gebracht werden. Hierdurch wird gleichzeitig ein Verschleiß der Klauenkupplung für die Rückwärtsgangstufe vermieden und die Schaltzeit verkürzt. Um die Klauenkuppung für die Rückwärtsgangstufe bei Synchrondrehzahl der zu schaltenden Wellen leichter zu schalten, können die Klauen in Schaltrichtung relativ spitz ausgestaltet werden. Dadurch spuren sie leichter ein. Eine sehr geringe, vorgebbare Rest-Relativdrehzahl kann das Einspuren weiter begünstigen, da so die Zahn-auf-Zahn-Stellung vermieden wird. Sie ist vor allem von der Form der Klauen abhängig.

Grundsätzlich reicht es aus, die Synchronisiereinrichtung in Abhängigkeit von der Drehzahl der Eingangswelle oder einer davon abgeleiteten Drehzahl zu aktivieren, da der Fahrer die Drehzahl und Drehrichtung der Ausgangswelle des Getriebes an der Bewegung des Fahrzeugs erkennen wird und die Rückwärtsschaltung erst veranlaßt, wenn das Fahrzeug fast steht. Hilfsweise kann jedoch die Drehzahl der Ausgangswelle ebenfalls von einem Drehzahlsensor erfaßt und in die Steuerung eingegeben werden. Dadurch kann die Relativdrehzahl der zu kuppelnden Wellen erfaßt werden. Ferner kann es zweckmäßig sein, den Schaltvorgang in Abhängigkeit bestimmter Kriterien abzubrechen und unmittelbar in die Rückwärtsgangstufe zu schalten, bevor die Fahrkupplung wieder geschlossen werden kann.

Da das Fahrzeug während der Schaltung annähernd stehen soll, sind die zu messenden Drehzahlen gering, so daß aufwendige Drehzahlmesser erforderlich sind. Man kann jedoch auch einfachere Geräte verwenden, die eine höhere Meßschwelle haben, wenn man die höhere Drehzahl ausgleicht, indem man in die Steuerung eine empirisch ermittelte Zeit vorgibt, um die die Aktivierungszeit der Synchronisiereinrichtung zu verlängern ist, damit die Synchronisation erreicht wird.

Die Ansprüche enthalten eine zweckmäßige Kombination von Lösungsmerkmalen, jedoch wird der Fachmann weitere Kombinationsmöglichkeiten in Betracht ziehen, die der geschilderten Lehre entsprechen.

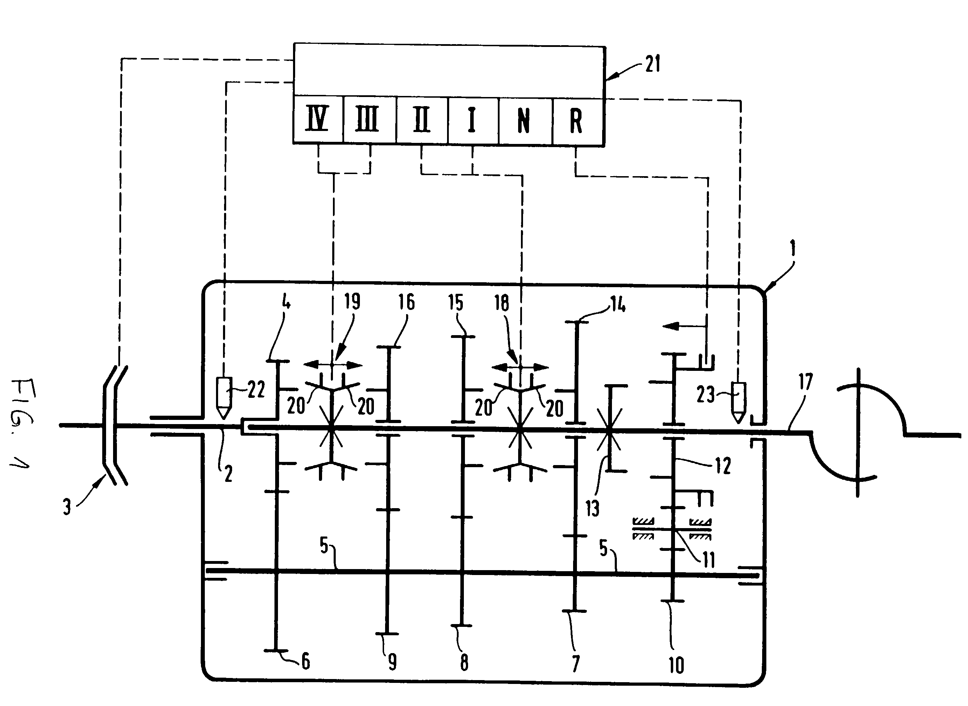

In der Zeichnung ist ein Ausführungsbeispiel der Erfindung dargestellt.

Mit 1 ist ein Zahnräderwechselgetriebe bezeichnet, dessen Eingangswelle 2 über eine Fahrkupplung 3 mit einem nicht näher dargestellten Antriebsmotor kuppelbar ist. Mit der Eingangswelle 2 drehfest verbunden ist ein Eingangszahnrad 4, das mit einem drehfest auf einer Vorgelegewelle 5 sitzenden Zahnrad 6 ständig kämmt.

Die Vorgelegewelle 5 weist weitere Zahnräder 7, 8 und 9 für Vorwärtsgangstufen I, II und III sowie ein Zahnrad 10 auf, das über ein Zwischenrad 11 mit einem Schiebe-Losrad 12 kämmt und über den Kupplungskörper 13 der Klauenkupplung eine Rückwärtsstufe R antreibt. Losräder für die erste, zweite und dritte Vorwärtsgangstufe I, II und III sind mit 14, 15 und 16 bezeichnet. Eine vierte Vorwärtsgangstufe IV wird dadurch erzielt, daß die Eingangswelle 2 bzw. das Zahnrad 4 direkt mit der Ausgangswelle 17 gekuppelt wird.

Die Losräder 14, 15 und 16 sind ebenfalls über die Doppelklauenkupplungen 18 und 19 mit der Abtriebswelle 17 verbindbar. Dabei weisen die Doppelklauenkupplungen 18 und 19 Synchronisiereinrichtungen 20 auf, während für die Rückwärtsgangstufe R eine Synchronisiereinrichtung fehlt.

Die Doppelklauenkupplungen sowie die Klauenkupplung der R-Gang-Stufe werden von einer Steuereinheit 21 geschaltet. Der gewünschte Gang wird vom Fahrer vorgegeben oder durch eine automatische Schalteinrichtung, die nicht näher dargestellt ist, ermittelt. Die für die Schaltung und Steuerung verwendeten Zustands- und Betriebsparameter können in geeigneter Weise einzeln oder zusammen angezeigt werden. Neben der gewünschten Schaltposition werden der Steuereinheit 21 Informationen über den Schaltzustand der Fahrkupplung 3, über die Drehzahl der Eingangswelle 2 mittels eines Drehzahlsensors 22 und über die Schaltstellungen der Doppelklauenkupplungen 18, 19 sowie der Klauenkupplung der R-Gang-Stufe zugeführt.

Die Rückwärtsgangstufe wird wie folgt synchronisiert:

### Ausgangsstellung:

Zunächst wird das Zahnräderwechselgetriebe in eine Neutralstellung N geschaltet. Während des gesamten Schaltvorgangs ist die Fahrkupplung 3 geöffnet. Der Drehzahlsensor 22 erfaßt die Drehzahl der Eingangswelle 2. Liegt diese unterhalb einer programmierbaren, maximalen Einschaltdrehzahl, aber oberhalb der Synchrondrehzahl, wird die Schaltung ausgelöst. Oberhalb der programmierbaren Drehzahl betätigt die Steuereinrichtung 21 eine der Synchronisiereinrichtungen 20 der Vorwärtsgangstufen so lange, bis die Drehzahl auf eine für die Schaltung in den Rückwärtsgang zulässige Drehzahl (bzw. programmierbare Zieldrehzahl) abgebaut ist.

Darauf schaltet sie die betreffende Doppelklauenkupplung wieder nach Neutral und unmittelbar das Schiebe-Losrad 12 des R-Ganges in Richtung auf den Kupplungskörper 13, der fest über eine Verzahnung mit der Hauptwelle 17 verbunden ist.

Mit einem Drehzahlsensor 23 wird die Drehzahl der Abtriebswelle 17 erfaßt und in die Steuereinrichtung 21 eingegeben.

## Patentansprüche

1. Verfahren zum Schalten eines Rückwärtsganges in einem Zahnräderwechselgetriebe mit einer Steuereinrichtung, mit der mit Synchronisiereinrichtungen versehene Klauenkupplungen von Vorwärtsgängen geschaltet werden, während eine Fahrkupplung die Zugkraft unterbricht, wobei das Zahnräderwechselgetriebe mit einem die Drehzahl der Eingangswelle erfassenden Drehzahlsensor und mit einer nicht synchronisierten Rückwärtsgangstufe ausgestattet ist, und wobei der Steuereinrichtung die gemessene Drehzahl der Eingangswelle ständig zugeführt wird, dadurch **gekennzeichnet,** daß zum Schalten der Rückwärtsgangstufe die Steuereinrichtung die gemessene Eingangswellendrehzahl mit einer programmierbaren Höchstdrehzahl der Eingangswelle vergleicht und zunächst eine Synchronisiereinrichtung einer der Vorwärtsgangstufen aktiviert, wenn diese Höchstdrehzahl unterhalb der gemessenen Eingangswellendrehzahl liegt, um ein Abbremsen der Eingangswelle zu bewirken, und daß danach die Steuereinrichtung die gemessene Eingangswellendrehzahl mit einer von Null verschiedenen Restdrehzahl oder einer programmierbaren von Null verschiedenen Zieldrehzahl der Eingangswelle vergleicht, und bei deren Erreichen die aktivierte Synchronisiereinrichtung gelöst und die Rückwärtsgangstufe geschaltet wird, bevor die Fahrzeugkupplung geschlossen wird.

2. Verfahren nach Anspruch 1, **dadurch gekennzeichnet**, daß die Rückwärtsgangstufe mittels einer Klauenkupplung eingelegt wird, deren Klauen rund, schräg oder spitz sein können.

3. Verfahren nach Anspruch 1 oder 2, **dadurch gekennzeichnet** daß die Aktivierung der Synchronisiereinrichtung um eine bestimmte Zeit verlängert werden kann, wenn die Drehzahl der Eingangwelle auf eine bestimmte Schwellendrehzahl abgefallen ist.

4. Verfahren nach Anspruch 3, **dadurch gekennzeichnet**, daß die bestimmte Zeit in Abhängigkeit von Betriebs- und Konstruktionsparametern, z. B. die Klauenform, den Verschleiß, die Öltemperatur, die Außentemperatur, die Alterung, die Viskosität usw. sowie deren erste bis zehnte Ableitungen nach der Zeit durch unmittelbare oder errechnete Kenngrößen, Kennlinien, Kennfelder oder adaptierte Steuerprogramme ermittelt wird.

## Claims

1. Process for shifting into a reverse gear in a gear-change mechanism with a control device by means of which claw clutches which pertain to forward gears and which are provided with synchronising devices are engaged while a main clutch disconnects the tractive force, wherein the gear-change mechanism is equipped with a speed sensor which detects the speed of the input shaft and with a non-synchronised reverse gear stage, and wherein the measured speed of the input shaft is constantly supplied to the control device, characterised in that with a view to shifting into the reverse gear stage the control device compares the measured speed of the input shaft with a programmable maximum speed of the input shaft and, if said maximum speed lies below the measured speed of the input shaft, firstly activates a synchronising device pertaining to one of the forward gear stages in order to bring about deceleration of the input shaft, and in that the control device then compares the measured speed of the input shaft with a residual speed of the input shaft differing from zero or a programmable target speed differing from zero and when said residual speed or said target speed is reached the activated synchronising device is released and the reverse gear stage is shifted before the vehicle clutch is closed.

2. Process according to Claim 1, characterised in that the reverse gear stage is engaged by means of a claw clutch, the claws of which may be round, oblique or pointed.

3. Process according to Claim 1 or 2, characterised in that the time during which the synchronising device is activated can be extended by a set time if the speed of the input shaft has fallen to a definite threshold speed.

4. Process according to Claim 3, characterised in that the set time is ascertained as a function of operational and design parameters - eg, the shape of the claws, the wear, the oil temperature, the external temperature, the ageing, the viscosity, etc, and also the first to tenth derivatives thereof with respect to time - by means of directly-measured or calculated characteristic magnitudes, characteristic curves, characteristic fields or adapted control programs.

## Revendications

1. Procédé d'engagement d'une marche arrière dans une boîte de vitesses à pignons dentés pourvue d'un dispositif de commande, qui assure l'engagement des vitesses au moyen d'accouplements à griffes des vitesses en marche avant, pourvues de moyens de synchronisation, pendant qu'un embrayage interrompt la transmission de la force de traction, la boîte de vitesses étant équipée d'un compteur de tours pour mesurer le nombre de tours de l'arbre d'entrée et d'un rapport de marche arrière non synchronisé, et le nombre de tours mesuré dudit arbre d'entrée étant transmis constamment au dispositif de commande, **caractérisé en ce que** pour enclencher le rapport de marche arrière, le dispositif de commande compare la valeur mesurée du nombre de tours de l'arbre d'entrée à un nombre de tours maximal programmé de cet arbre d'entrée, et active ensuite un dispositif de synchronisation d'un des rapports de marche avant, si cette valeur maximale se situe en dessous de la valeur mesurée du nombre de tours de l'arbre d'entrée, pour générer un ralentissement de l'arbre d'entrée, et en ce que, par la suite, le dispositif de commande compare la valeur mesurée du nombre de tours de l'arbre d'entrée avec une valeur résiduelle du nombre de tours, différent de zéro, ou avec une valeur de référence différente de zéro, programmable, et en ce que, lorsque cette valeur est atteinte, le dispositif de synchronisation est désactivé et le rapport de marche arrière est engagé avant que l'embrayage du véhicule soit verrouillé.

2. Procédé selon la revendication 1, **caractérisé en ce que** le rapport de marche arrière est engagé au moyen d'un accouplement à griffes, dont les griffes peuvent être arrondies, en biseau ou pointues.

3. Procédé selon la revendication 1 ou 2, **caractérisé en ce que** l'activation du dispositif de synchronisation peut être prolongé d'un temps déterminé, lorsque le nombre de tours de l'arbre d'entrée a décru jusqu'à une valeur seuil prédéterminée.

4. Procédé selon la revendication 3, **caractérisé en ce que** ledit temps prédéterminé est fixé en fonction de paramètres de fonctionnement et de construction, par exemple la forme des griffes, l'usure, la température de l'huile, la température extérieure, le vieillissement, la viscosité etc., ainsi que de leur première à leur dixième dérivation par rapport au temps, par des grandeurs connues, des lignes connues, des champs connus ou des programmes de commande adaptés, aléatoires ou calculés.
